# EUROPÄISCHE PATENTSCHRIFT

(11) **EP 1 280 629 B1**
(45) Veröffentlichungstag und Bekanntmachung des Hinweises auf die Patenterteilung: **28.01.2004**
(21) Anmeldenummer: 01936312.6
(22) Anmeldetag: 03.05.2001
(51) Int. Cl.: B23D 61/18, B24D 3/06

(54) **NICKEL-DIAMANT BESCHICHTETER SÄGEDRAHT MIT VERBESSERTER VERANKERUNG DER DIAMANTPARTIKEL**
NICKEL-DIAMOND-COATED SAW WIRE WITH IMPROVED ANCHORING OF THE DIAMOND PARTICLES
FIL A SCIER REVETU DE NICKEL ET DE DIAMANT, PRESENTANT UN MEILLEUR ANCRAGE DES PARTICULES DE DIAMANT

(30) Priorität: 11.05.2000 DE 10022994
(43) Veröffentlichungstag der Anmeldung: 05.02.2003
(73) Patentinhaber: Wacker-Chemie GmbH, 81737 München (DE)
(72) Erfinder: LUKSCHANDEL, Jörg, 87439 Kempten (DE); MEYER, Jürgen, 87437 Kempten (DE)
(74) Vertreter: Potten, Holger
(86) Internationale Anmeldenummer: PCT/EP2001/004968
(87) Internationale Veröffentlichungsnummer: WO 2001/085376

(56) Entgegenhaltungen:
- EP-A- 0 916 449
- EP-A- 1 025 942
- DE-A- 19 839 091
- US-A- 4 187 828
- PATENT ABSTRACTS OF JAPAN vol. 018, no. 396 (M-1644), 25. Juli 1994 (1994-07-25) -& JP 06 114739 A (MITSUBISHI MATERIALS CORP), 26. April 1994 (1994-04-26)
- PATENT ABSTRACTS OF JAPAN vol. 012, no. 227 (M-713), 28. Juni 1988 (1988-06-28) -& JP 63 022275 A (NACHI FUJIKOSHI CORP), 29. Januar 1988 (1988-01-29)
- PATENT ABSTRACTS OF JAPAN vol. 013, no. 258 (M-838), 15. Juni 1989 (1989-06-15) -& JP 01 064717 A (HIROYUKI KANAI), 10. März 1989 (1989-03-10)

## Beschreibung

Die Erfindung betrifft einen Nickel-Diamant beschichteten Sägedraht mit verbesserter Verankerung der Diamantpartikel in der metallischen Bindephase gemäß dem Oberbegriff von Anspruch 1 und ein Verfahren zur Herstellung eines solchen Sägedrahts.

In DE A 19839091 (entspricht der US Anmeldung mit der Serial Number 09/332722) wird ein Nickel-Diamant beschichteter Sägedraht, ein Verfahren zu seiner Herstellung sowie seine Verwendung beschrieben. Ein solcher Draht kann zum Sägen sprödharter Materialien wie Silizium eingesetzt werden. Die Herstellung des Sägedrahtes erfolgt dadurch, daß ein Draht nach einer chemischen Vorbehandlung in ein Chemisch-Nickel-Bad eingebracht wird, das Diamantpartikel, vorzugsweise eines mittleren Durchmessers von 5 bis 30 µm, enthält. Die sich auf der Drahtoberfläche ablagernden Diamantpartikel werden zunächst von schwachen chemischen und/oder physikalischen Bindungskräften fixiert. Im Verlaufe des Beschichtungsprozesses werden die anhaftenden Diamantpartikel von der aufwachsenden Nickelschicht fest umschlossen und somit sicher verankert. Die Dicke der metallischen Bindephase beträgt vorzugsweise 5 - 20 µm. Durch eine anschließende thermische Aushärtung werden die Eigenschaften der metallischen Bindephase erheblich verbessert. So ist ein Abbau der Zugeigenspannungen in der metallischen Bindephase zu beobachten, die Haftfestigkeit wird erhöht und die Schichthärte deutlich gesteigert. Ein solcher Draht zeigt beim Sägen von Silizium sehr gute Sägeresultate, wie aus der o. g. Anmeldung ersichtlich.

Aufgrund der beschriebenen Eigenschaften erscheint der Nickel-Diamant beschichtete Sägedraht auch für das Sägen von keramischen Hartstoffen wie Siliziumkarbid geeignet. In Versuchen zeigte sich zwar, das keramische Hartstoffe grundsätzlich mit einem solchen Sägedraht getrennt werden können, die hohe Härte der keramischen Hartstoffe führt jedoch dazu, daß die erreichbaren Sägeraten und auch die Lebensdauer des beschichteten Sägedrahtes für eine industrielle Nutzung nicht ausreichen.

Aufgabe der Erfindung ist es, einen diamantbelegten Sägedraht zur Verfügung zu stellen, der eine erhöhte Verschleißfestigkeit beim Sägen von harten Materialien wie z. B. keramischen Hartstoffen besitzt.

Die Aufgabe wird gelöst durch einen Sägedraht, bestehend aus einem Stahldraht, einer Zwischenschicht und einer metallischen Bindephase, in die Diamantkörner mit einem mittleren Durchmesser von 10 bis 50 µm eingelagert sind, wobei die Zwischenschicht unversehrt und frei von Diamantkörnern ist und sowohl eine Wasserstoffversprödung des Drahtes verhindert, als auch eine ausreichende Haftfestigkeit der metallischen Bindephase sicherstellt, dadurch gekennzeichnet, daß die metallische Bindephase eine Härte zwischen 600 und 1100 HV 0,1 besitzt und aus einer inneren Schicht und einer äußeren Schicht besteht, welche konzentrisch um den mit der Zwischenschicht versehenen Stahldraht angeordnet sind, wobei die innere Schicht eine Stärke von etwa 10 bis 25 % des mittleren Diamantkorn-Durchmessers hat und die äußere Schicht eine solche Stärke hat, daß die Gesamtstärke der metallischen Bindephase 45 - 55% des mittleren Diamantkorn-Durchmessers beträgt und die Diamantkörner einen mittleren Abstand von nicht mehr als dem 5-fachen ihres mittleren Durchmessers haben und sich zwischen den Diamantkörnern mit einem mittleren Durchmesser von 10 bis 50 µm weitere feine Partikel mit einem mittleren Durchmesser von 1 bis 6 µm befinden.

Die auf dem Sägedraht fixierten Diamantkörner sind somit bis etwa zu ihrem Äquator in der metallischen Bindephase verankert.

Die auf dem Draht fixierten Diamantkörner haben vorzugsweise einen mittleren Durchmesser von 25 bis 45 µm. Die genannten Diamantkörner befinden sich vorzugsweise in einer derartigen Menge auf dem Draht, daß ihr mittlerer Abstand nicht mehr als das 0,5- bis 3-fache ihres mittleren Durchmessers beträgt.

Zwischen den Diamantkörnern des mittleren Durchmessers von 10 bis 50 µm befinden sich weitere feine Partikel. Bei diesen feinen Partikeln handelt es sich vorzugsweise um Hartstoffpartikel. Sie haben einen mittleren Durchmesser von 1 bis 6 µm, vorzugsweise 2 bis 4 µm. Diese feinen Partikel sind vorzugsweise nur in der oberen der beiden Schichten der metallischen Bindephase vorhanden.

Bei diesen kleineren Hartstoffpartikeln handelt es sich vorzugsweise ebenfalls um Diamantkörner. Der mittlere Durchmesser dieser feinen Diamantkörner wird bei der Festlegung der Schichtdicke der Bindephase (erfindungsgemäß 45-55 % des mittleren Diamantkorn-Durchmessers) nicht berücksichtigt. Für die Festlegung der Schichtdicke der Bindephase dient nur der mittlere Durchmesser der gröberen Diamantkörner.

Der erfindungsgemäße Sägedraht hat einschließlich Schleifkornbelag vorzugsweise einen Durchmesser von bis zu max. 0,35 mm.

Als Stahldraht wird vorzugsweise nichtrostender Federstahldraht aus Chrom-Nickel-Stahl verwendet. Geeignet sind z. B. die Werkstofftypen 1.4310, 1.4401, 1.4539, 1.4568 und 1.4571 (Bezeichnung nach DIN 17224).

Der Stahldraht hat vorzugsweise einen Durchmesser von 0,15 bis 0,30 mm.

Die Zwischenschicht besteht vorzugsweise aus einem Metall, einer Metallegierung oder einer Kombination zweier Metalle bzw. eines Metalls und einer Metallegierung.

Vorzugsweise handelt es sich um ein Metall, eine Metallegierung oder eine Kombination zweier Metalle bzw. eines Metalls und einer Metallegierung, die mit guter Haftfestigkeit galvanotechnisch beschichtbar ist und gleichzeitig als Wasserstoffbarriere wirkt.

Geeignete Metalle sind z. B. Kupfer und Nickel und als Metalllegierung z. B. Messing.

Die Zwischenschicht hat vorzugsweise eine Stärke von 1 bis 10 µm.

Die metallische Bindephase besteht vorzugsweise aus Nickel bzw. Nickellegierungen. Besonders bevorzugt besteht sie aus außenstromlos abgeschiedenem Nickel (Chemisch Nickel).

Die metallische Bindephase hat vorzugsweise eine Härte HV 0,1 von 800 bis 1100, besonders bevorzugt 1000 bis 1100.

Vorzugsweise variiert die Dicke der Zwischenschicht um den Draht um nicht mehr als 5 %.

Vorzugsweise variiert die Dicke der metallischen Bindephase um den Draht um nicht mehr als 5 %, besonders bevorzugt um nicht mehr als 2,5%.

In einer besonders bevorzugten Ausführungsform beträgt die Schichtdicke der metallischen Bindephase 12 bis 15 µm und die Dicke der metallischen Bindephase um den Draht variiert um maximal 0,4 µm.

Der erfindungsgemäße Sägedraht kann wie folgt hergestellt werden:

Wie bereits aus DE A 19839091 bekannt, erfährt ein mit einer Zwischenschicht versehener Draht eine auf das Grundmaterial abgestimmte, chemische Vorbehandlung. Sie ist im Stand der Technik bekannt und besteht üblicherweise aus bekannten Entfettungs-, Beiz- und Aktivierungsbehandlungen. Anschließend erfolgt die Beschichtung in einem sogenannten Chemisch-Nickel-Diamantbad (Bad zur außenstromlosen Nickel-Diamant-Abscheidung). Solche Bäder sind im Stand der Technik ebenfalls bekannt. Wie aus dem Stand der Technik ferner bekannt, kann es nützlich sein, das Anspringen der Metallisierung durch einen kurzen Stromstoß einzuleiten. Durch eine geeignete Bewegung von Draht und Elektrolyt wird eine gleichmäßige Diamanteinlagerung auf dem gesamten Umfang des Drahtes erreicht. Erfindungswesentlich ist beim erfindungsgemäßen Verfahren, daß die Beschichtung in zwei Stufen erfolgt, wobei in der ersten Stufe Diamantpartikel mit einem mittleren Durchmesser von 10 - 50 µm auf dem Draht abgelagert werden und in der zweiten Stufe feine Partikel mit einem mittleren Durchmesser von 1 bis 6 µm auf dem Draht abgelagert werden.

Mittels des erfindungsgemäßen Verfahrens lassen sich innerhalb einer Stunde um den Faktor 10³ mehr beschichteter Draht herstellen, als mittels elektrochemischer Abscheidung in kontinuierlichen Durchlaufanlagen bei vergleichbarer Anlagengröße.

Vorzugsweise wird im Anschluß an die Beschichtung eine mindestens einstündige Wärmebehandlung durchgeführt.

Im erfindungsgemäßen Verfahren erfolgt die zweistufige Beschichtung des Drahtes nach der chemischen Vorbehandlung vorzugsweise wie folgt:
In der ersten Beschichtungsstufe wird der Draht in ein Chemisch-Nickel Bad eingebracht, das Diamantpartikel mit einem mittleren Durchmesser von 10 - 50 µm, -vorzugsweise 25 - 45 µm-, enthält. Der Beschichtungsprozeß wird so gesteuert, daß sich im Idealfall eine Monolage von Diamantkörnern auf die Drahtoberfläche ablagert, die im Verlaufe des Prozeßes von der aufwachsenden Nickelschicht fixiert werden. Die erste Beschichtungsstufe ist abgeschlossen, sobald die Nickelschicht eine Dicke von 10 bis 25 % des mittleren Diamantkorn-Durchmessers erreicht hat.

In der zweiten Beschichtungsstufe erfolgt die Abscheidung einer weiteren Chemisch-Nickel-Schicht, die deutlich feinere Partikel enthält als die erste Chemisch-Nickel-Schicht.

Die Dicke der in dieser 2. Verfahrensstufe abgeschiedenen Chemisch-Nickel-Schicht mit darin eingebetteten, feinen Partikeln wird so gewählt, daß die Gesamtschichtdicke einschließlich der im ersten Beschichtungsschritt abgeschiedenen Schicht vorzugsweise 45 - 55 % des mittleren Diamantkorn-Durchmessers der Diamantkörner, die im ersten Verfahrensschritt verwendet wurden, beträgt. Bei der näherungsweise äquiaxialen Gestalt des Diamantkorns wird somit eine gute Verankerung bis etwa zum Äquator der Diamantkörner in der metallischen Bindephase erreicht.

Die feinen Partikel haben in diesem Bad einen mittleren Korndurchmesser von 1 bis 6 µm, bevorzugt von 2 bis 4 µm.

Bevorzugt handelt es sich um Hartstoffpartikel, wobei von diesen wiederum Diamantpartikel bevorzugt sind.

In dieser zweiten Beschichtungsstufe erfolgt somit die Verankerung der groben Diamantkörner mit einer weiteren Chemisch-Nickel-Dispersionsschicht.

Grundsätzlich ist es auch möglich, die gesamte zur Fixierung der groben Diamantkörner auf dem Draht erforderliche metallische Bindephase als eine Dispersionsschicht mit eingelagerten groben Diamanten und feinen Hartstoffpartikeln auszubilden. Das Beschichtungsverfahren zur Herstellung eines solchen Drahtes wird dann, wie in DE 19839091 beschrieben, durchgeführt, wobei dem Beschichtungsbad sowohl grobe als auch feine Körner gleichzeitig zugesetzt werden. Ein solches Herstellungsverfahren ist zwar einfacher durchzuführen, als das erfindungsgemäße, allerdings hat der so erhaltene Draht den gravierenden Nachteil, daß er seine Schneidefähigkeit, insbesondere beim Sägen harter Materialien, aus folgendem Grund frühzeitig verliert:

Die gegen Ende der Verweilzeit des Drahtes im Beschichtungsbad eingebundenen groben Diamantkörner sind wegen ihrer schwachen Verankerung in der Bindephase nur leicht fixiert. Sie werden beim Sägen rasch herausgerissen. Das führt zum umgehenden Verlust der Schneidfähigkeit des Drahtes.

Wie bereits in DE-A-19839091 beschrieben, wird der Sägedraht nach der Beschichtung üblicherweise einer Wärmebehandlung, vorzugsweise bei 350 °C unterzogen, um in der Schicht vorhandene Zugeigenspannungen abzubauen und die Schichthärte und damit den Verschleißwiderstand der metallischen Bindephase zu erhöhen.

Da bei der Verankerung der groben Diamantpartikel in einer weiteren Dispersionsschicht bereits eine unter Druckeigenspannungen stehende Schicht mit hohem Verschleißwiderstand vorliegt, ist es bevorzugt, eine Wärmebehandlung ausschließlich unter dem Gesichtspunkt einer Steigerung der Schichthaftfestigkeit durchzuführen. Dazu ist eine Wärmebehandlungstemperatur von 150 - 200 °C ausreichend.

Diese niedrige Wärmebehandlungstemperatur hat nun den Vorteil, daß auch geeignete unlegierte hochfeste Drähte nach dem erfindungsgemäßen Verfahren beschichtet und ohne kritischen Abfall von Zugfestigkeit und Elastizität bei 150 - 200 °C thermisch behandelt werden können.

Elektrolytische Abscheideverfahren sind zur Herstellung des erfindungsgemäßen Drahtes nicht geeignet, da mit ihnen die erfindungsgemäße Härte der metallischen Bindephase und die vorzugsweise vorhandene geringe Dickenschwankung der metallischen Bindephase nicht erreichbar sind.

Die folgenden Beispiele dienen der weiteren Erläuterung der Erfindung.

### Beispiel 1 (Vergleichsbeispiel)

### Herstellung eines Vergleichsdrahtes analog J-OS 09-001455:

Es wurden 60 m eines hochlegierten Stahldrahtes, käuflich erhältlich unter der Bezeichnung 12 R 10 Nicoat bei der Firma Sandvik, mit einem Durchmesser von 0,18 mm auf einen für die stromlose Nickelabscheidung üblichen Warenträger aufgenommen.

Der Draht wurde der bei einer stromlosen Nickelabscheidung üblichen Entfettungs-, Beiz- und Aktivierungsbehandlung unterzogen. Anschließend erfolgt die Beschichtung in einem käuflich erhältlichen Chemisch-Nickel-Diamantbad (erhältlich unter der Bezeichnung Niposit 65 bei der Firma Shipley in Esslingen). Dem Bad werden Diamantpartikel mit einem mittleren Korndurchmesser von 25 µm (käuflich erhältliches genormtes Standardprodukt) zugesetzt. Durch eine Bewegung von Draht und Elektrolyt wurde eine gleichmäßige Diamanteinlagerung auf dem gesamten Umfang des Drahtes in die aus Chemisch-Nickel bestehende Bindephase erreicht. Nach Erreichen einer Chemisch-Nickel-Schichtdicke von 3 µm wurde der Warenträger aus dem Diamantbad entnommen und nach einem Spülschritt in ein weiteres, jedoch feststofffreies Chemisch-Nickel-Bad umgesetzt. Die Expositionszeit in diesem Bad wurde so gewählt, daß die Dicke der feststofffreien Schicht 8 µm betrug und somit eine Gesamtschichtdicke von 11 µm vorlag. Nachfolgend wird dieser Draht als Sägedraht b) bezeichnet.

### Beispiel 2

### Herstellung eines erfindungsgemäßen Sägedrahts

Bei dem erfindungsgemäßen Beschichtungsverfahren erfolgte das Aufbringen der groben Diamantpartikel auf der Drahtoberfläche analog Beispiel 1. Auch hier betrug die Dicke der Chemisch-Nickel-Schicht 3 µm. Anschließend wurde der Warenträger dem Bad entnommen und nach einem Spülschritt in ein weiteres Chemisch-Nickel-Diamantbad umgesetzt. In diesem Bad lagen Diamantpartikel mit einem mittleren Durchmesser von 2 µm vor. Die Expositionszeit in dem Bad wurde so gewählt, daß die Dicke der Dispersionsschicht 8 µm betrug und somit ebenfalls eine Gesamtschichtdicke von 11 µm vorlag. Nachfolgend wird dieser Draht als Sägedraht c) bezeichnet.

Beide Sägedrahtvarianten wurden abschließend zum Zwecke der Aushärtung bei 350°C für eine Stunde wärmebehandelt.

### Beispiel 3

### Ermittlung der Verschleißfestigkeit eines erfindungsgemäßen Sägedrahtes und zweier Sägedrähte des Stands der Technik

Zur Beurteilung der Drähte wurden vergleichende Sägeversuche an Silizium- und Siliziumkarbidproben auf einer Well-Labordrahtsäge (Typ 6234) mit dem in DE A 19839091 beschriebenen Meßsystem durchgeführt.

Die Funktionsweise dieser Säge mit Vor- und Rückspulen des Sägedrahts hat zur Folge, daß der Draht pro Minute bis zu 10 mal seine Arbeitsrichtung ändert. Im Laufe längerer Sägezeiten finden also mehrere hundert Drahtüberläufe im Sägespalt statt, so daß die Standfestigkeit des Drahtes deutlich zum Ausdruck kommt.

Es wurden folgende Sägedrähte eingesetzt:
a) ein bekannter Sägedraht gemäß DE A 19839091 (dort erfindungsgemäßes Beispiel)
b) ein Sägedraht mit einer Verankerung der Diamantpartikel mit einer feststofffreien Nickelschicht, wie er beispielsweise in J-OS 09-001455 beschrieben ist (Draht aus Beispiel 1).
c) ein erfindungsgemäßer Sägedraht mit einer Verankerung der Diamantpartikel mit einer Nickel-Diamant-Schicht, in die Diamantpartikel des Korndurchmessers 2 µm eingelagert wurden (Draht aus Beispiel 2).

Die Diamantbelegungsdichte war bei allen Sägedrähten identisch. Der Kornüberstand der groben Diamantpartikel war in den Fällen b) und c) identisch. Beim Sägedraht a) waren aufgrund der zum Teil nur wenig eingebetteten Diamanten lokal deutlich höhere Kornüberstände vorhanden.

Die Ergebnisse der Sägeversuche lassen sich wie folgt zusammenfassen:

Beim Sägen eines Siliziumquaders (50 x 22.5 mm) wurden die besten Ergebnisse mit dem Sägedraht c) erreicht. Die zum Trennen der Probe erforderliche Zeit liegt um etwa 10 % niedriger als beim Draht a) und noch um 5 % niedriger als beim Draht b).

Besonders augenfällig sind die Vorteile des Sägedrahts c) beim Trennen von Siliziumkarbid:

Bei diesen Versuchen fand als Probekörper ein SiC-Zylinder mit einem Durchmesser von 65 mm Verwendung. Als Maß für die Schnittleistung der Drähte wurde die gesägte Fläche pro Zeiteinheit herangezogen. Die Ergebnisse sind in Tab. 1 wiedergegeben:

**Tab. 1**

| Gesägte Siliziumcarbid-Fläche in Abhängigkeit von der Sägedauer | | | |
|---|---|---|---|
| Gesägte Fläche (mm²) | Sägedauer in Minuten | | |
| | Sägedraht a) | Sägedraht b) | Sägedraht c) |
| 500 | 8,0 | 5,5 | 5,0 |
| 1000 | 16,5 | 13,0 | 10,5 |
| 1500 | 27,5 | 21,0 | 17,5 |
| 2000 | 40,5 | 31,5 | 26,5 |
| 2500 | 56,5 | 44,0 | 36,0 |
| 3000 | 76,0 | 59,5 | 48,5 |

Die in Tab. 1 wiedergegebenen Ergebnisse zeigen, daß bei Verwendung des Sägedrahts c) die zum Trennen der Siliziumkarbidprobe erforderliche Zeit um etwa 35 % niedriger liegt als beim Draht a) und noch um über 20 % niedriger als beim Draht b).

Weiterhin ist ersichtlich, daß der Sägedraht c) mit zunehmender Schnittfläche weitaus weniger an Sägeleistung verliert als die Drähte a) und b) und daher besonders für das Trennen von harten Materialien geeignet ist.

## Patentansprüche

1. Sägedraht mit erhöhter Verschleißfestigkeit beim Sägen von harten Materialien, bestehend aus einem Stahldraht, einer Zwischenschicht und einer metallischen Bindephase aus außenstromlos abgeschiedenem Nickel in die Diamantkörner mit einem mittleren Durchmesser von 10 bis 50 µm eingelagert sind, wobei die Zwischenschicht unversehrt und frei von Diamäntkörnern ist und sowohl eine Wasserstoffversprödung des Drahtes verhindert, als auch eine ausreichende Haftfestigkeit der metallischen Bindephase sicherstellt **dadurch gekennzeichnet, daß** die metallische Bindephase eine Härte zwischen 600 und 1100 HV 0,1 besitzt und aus einer inneren Schicht und einer äußeren Schicht besteht, welche konzentrisch um den mit der Zwischenschicht versehenen Stahldraht angeordnet sind, wobei die innere Schicht eine Stärke von etwa 10 bis 25 % des mittleren Diamantkorn-Durchmessers hat und die äußere Schicht eine solche Stärke hat, daß die Gesamtstärke der metallische Bindephase 45 - 55 % des mittleren Diamantkorn-Durchmessers beträgt und die Diamantkörner einen mittleren Abstand von nicht mehr als dem 5-fachen ihres mittleren Durchmessers haben und sich nur in der äußeren Schicht zwischen den Diamantkörnern mit einem mittleren Durchmesser von 10 bis 50 µm weitere feine Partikel mit einem mittleren Durchmesser von 1 bis 6 µm befinden.

2. Sägedraht nach Anspruch 1, **dadurch gekennzeichnet, daß** die auf dem Draht fixierten Diamantkörner einen mittleren Durchmesser von 25 bis 45 µm haben.

3. Sägedraht nach einem der Ansprüche 1 oder 2, **dadurch gekennzeichnet, daß** es sich bei den feinen Partikeln um Hartstoffpartikel handelt.

4. Sägedraht nach Anspruch 3, **dadurch gekennzeichnet, daß** es sich bei den Hartstoffpartikeln um Diamantkörner handelt.

5. Verfahren zur Herstellung eines Sägedrahtes gemäß einem der Ansprüche 1 bis 4, **dadurch gekennzeichnet, daß** ein mit einer Zwischenschicht versehener Draht eine auf das Grundmaterial abgestimmte, chemische Vorbehandlung erfährt und daß anschließend eine Beschichtung in einem Chemisch-Nickel-Diamantbad (Bad zur außenstromlosen Nickel-Diamant-Abscheidung) erfolgt, wobei durch eine Bewegung von Draht und Elektrolyt eine gleichmäßige Diamanteinlagerung auf dem gesamten Umfang des Drahtes erreicht wird, **dadurch gekennzeichnet, daß** die Beschichtung in zwei Stufen erfolgt, wobei in einer ersten Stufe Diamantpartikel mit einem mittleren Durchmesser von 10 - 50 µm auf dem Draht abgelagert werden und in einer zweiten Stufe feine Partikel mit einem mittleren Durchmesser von 1 bis 6 µm auf dem Draht abgelagert werden.

## Claims

1. Saw wire with a high resistance to wear when sawing hard materials, comprising a steel wire, an intermediate layer and a metallic binder phase of nickel deposited without external current in which diamond grains, with a mean diameter of 10 to 50 µm are embedded, the intermediate layer being undamaged and free of diamond grains and serving both to prevent hydrogen embrittlement of the wire and to ensure sufficient adhesive strength of the metallic binder phase, **characterized in that** the metallic binder phase has a hardness of between 600 and 1100 HV 0.1 and comprises an inner layer and an outer layer, which are arranged concentrically around the steel wire which has been provided with the intermediate layer, the inner layer having a thickness of approximately 10 to 25% of the mean diamond grain diameter and the outer layer having a thickness which is such that the total thickness of the metallic binder phase is 45 - 55% of the mean diamond grain diameter, and the diamond grains having a mean spacing between them of no more than five times their mean diameter and further fine particles with a mean diameter of from 1 to 6 µm being situated only in the outer layer between the diamond grains with a mean diameter of from 10 to 50 µm.

2. Saw wire according to Claim 1, **characterized in that** the diamond grains which are fixed to the wire have a mean diameter of from 25 to 45 µm.

3. Saw wire according to one of Claims 1 or 2, **characterized in that** the fine particles are hard-material particles.

4. Saw wire according to Claim 3, **characterized in that** the hard-material particles are diamond grains.

5. Process for producing the saw wire according to one of Claims 1 to 4, **characterized in that** a wire which has been provided with an intermediate layer undergoes a chemical pretreatment which is adapted to the base material, and **in that** this is followed by coating in a chemical nickel-diamond bath (bath for nickel-diamond deposition without external current), uniform diamond embedding over the entire circumference of the wire being achieved by means of a movement of wire and electrolyte, **characterized in that** the coating takes place in two stages, diamond particles with a mean diameter of 10 - 50 µm being deposited on the wire in a first stage and fine particles with a mean diameter of 1 to 6 µm being deposited on the wire in a second stage.

## Revendications

1. Fil à scier avec une résistance élevée à l'usure lors du sciage de matériaux durs, constitué d'un fil en acier, d'une couche intermédiaire et d'une phase de liant métallique en nickel déposé sans courant extérieur dans laquelle sont incorporés des grains de diamant présentant un diamètre moyen de 10 à 50 µm, la couche intermédiaire étant intacte et exempte de grains de diamant, empêchant une fragilisation due à l'hydrogène du fil et assurant une adhérence suffisante de la phase de liant métallique, **caractérisé en ce que** la phase de liant métallique présente une dureté entre 600 et 1100 HV 0,1 et est constituée d'une couche intérieure et d'une couche extérieure, qui sont disposées de manière concentrique autour du fil d'acier pourvu de la couche intermédiaire, la couche intérieure présentant une épaisseur d'environ 10 à 25% du diamètre moyen des grains de diamant et la couche extérieure présentant une épaisseur telle que l'épaisseur totale de la phase de liant métallique représente 45 à 55% du diamètre moyen des grains de diamant et les grains de diamant présentant une distance moyenne qui n'est pas supérieure à 5 fois leur diamètre moyen et d'autres particules fines, d'un diamètre moyen de 1 à 6 µm, ne se trouvant que dans la couche extérieure entre les grains de diamant présentant un diamètre moyen de 10 à 50 µm.

2. Fil à scier selon la revendication 1, **caractérisé en ce que** les grains de diamant fixés sur le fil présentent un diamètre moyen de 25 à 45 µm.

3. Fil à scier selon l'une quelconque des revendications 1 et 2, **caractérisé en ce que** les particules fines sont des particules dures.

4. Fil à scier selon la revendication 3, **caractérisé en ce que** les particules dures sont des grains de diamant.

5. Procédé pour la préparation d'un fil à scier selon l'une quelconque des revendications 1 à 4, **caractérisé en ce qu'**un fil pourvu d'une couche intermédiaire subit un prétraitement chimique adapté au matériau de base et **en ce qu'**on réalise ensuite un revêtement dans un bain chimique nickel-diamant (bain pour le dépôt sans courant extérieur de nickel et de diamant), une incorporation régulière de diamant étant obtenue sur toute la périphérie du fil par un mouvement du fil et de l'électrolyte, **caractérisé en ce que** le revêtement est réalisé en deux étapes, des particules de diamant présentant un diamètre moyen de 10 à 50 µm étant déposées sur le fil lors d'une première étape et des particules fines présentant un diamètre moyen de 1 à 6 µm étant déposées sur le fil lors d'une deuxième étape.
